# EUROPEAN PATENT SPECIFICATION

(11) **EP 0 584 546 B1**
(45) Date of publication and mention of the grant of the patent: **18.12.1996**
(21) Application number: 93111867.3
(22) Date of filing: 23.07.1993
(51) Int. Cl.: F21V 8/00

(54) **Lighting device**
Beleuchtungsvorrichtung
Dispositif d'éclairage

(30) Priority: 24.07.1992 IT TO920636
(43) Date of publication of application: 02.03.1994
(73) Proprietor: MAGNETI MARELLI S.p.A., 20145 Milano (IT)
(72) Inventor: Masuelli, Stefania, I-10043 Orbassano (IT); Perlo, Pietro, I-12048 Sommariva Del Bosco (IT)
(74) Representative: Jorio, Paolo

(56) References cited:
- EP-A- 0 452 815
- IBM TECHNICAL DISCLOSURE BULLETIN vol. 33, no. 9 , February 1991 , ARMONK,NY. US pages 261 - 262 'high efficiency backlight for lcd'

## Description

The present invention relates to a lighting device which is particularly suitable for use in lighting both on the inside and on the outside of a motor vehicle.

Lighting devices designed for this use in which the light flux is generated by an emitting surface, are known; these devices comprise a source of light radiation in which the light is directed in a substantially parallel direction to the emitting surface and a plurality of optical means which are able to transmit the light rays from the source in predetermined directions. The abovementioned means are usually made up of lenses, directional prisms, reflectors, diffusers or of systems of these elements.

Devices of this type have proved to be somewhat complex in terms of construction as a result of the large number of components and of the complex shape of some of these; also, the light flux produced using these devices cannot meet all the requirements set in connection with motor vehicle lighting; furthermore, because such devices take up a lot of space, they cannot be used in certain cases owing to the limited space available for housing them. EP-A-0 452 851 discloses a device that only in part overcomes these drawbacks.

The object of the present invention is to produce a lighting device, in particular for use on motor vehicles, which overcomes the drawbacks described and, therefore, which is structurally very simple, compact, and able to emit a light flux having the desired optical characteristics.

This object is achieved through a lighting device having the characteristics recited in claim 1.

In order to give a clearer idea of the lighting device of the invention, a more detailed description will now be given by way of example and with reference to the attached drawings in which:
- Figure 1 shows a perspective view of a part of the lighting device of the invention;
- Figures 2 and 3 show perspective views of parts of two different embodiments of the lighting device.

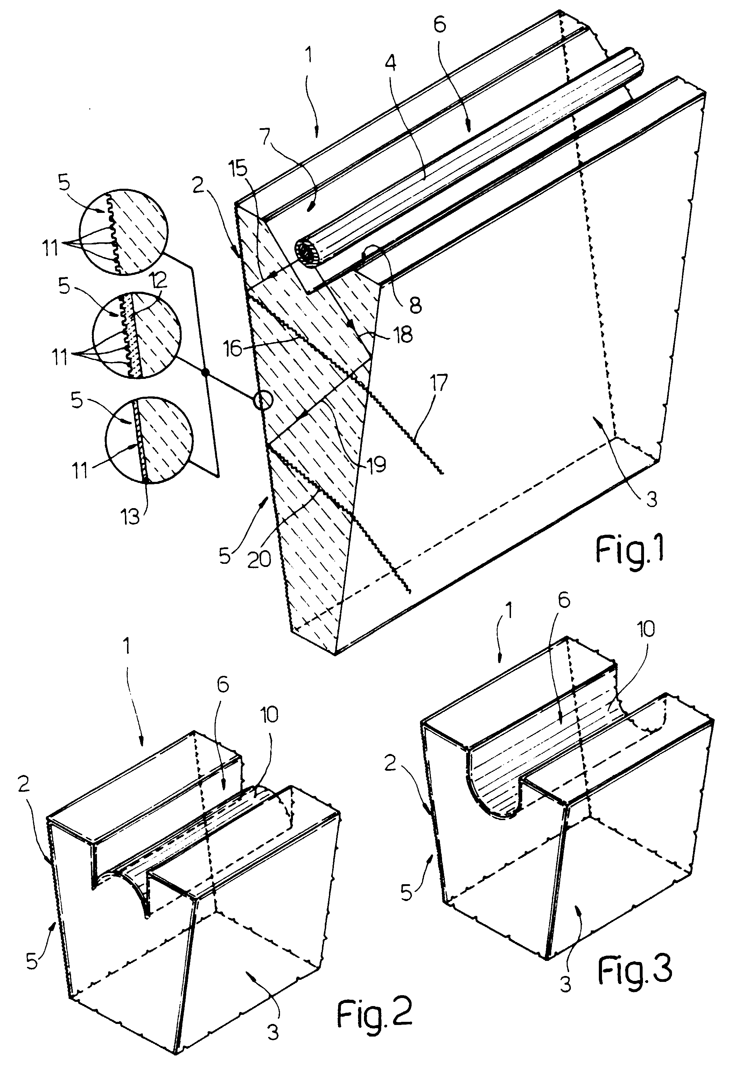

The device basically comprises a block of transparent material 1, delimited by a pair of convergent surfaces 2 and 3, and a source of light radiation 4 located between the planes bearing said surfaces, as is clearly visible in Figure 1. Diffraction means, indicated as a whole by reference 5, and on which is incident the light radiation emitted by the source 4, are located on the rear surface 2 of said pair. In addition, the block 1 has a longitudinal groove 6 which is substantially parallel to the surfaces 2 and 3 and in which the source of light radiation 4 is housed.

The abovementioned groove can simply be delimited by a pair of surfaces 7 and 8 together forming a dihedral, or else the groove can be delimited along the bottom by a cylindrical surface 10 (Fig. 2 and 3) which can act as a lens for the light radiation emitted by the source 4: in the embodiment shown in Figure 2 the abovementioned cylindrical surface is convex, whereas in the embodiment shown in Figure 3 it is concave.

Advantageously the source of light radiation 4 is a linear source whose axis is parallel to that of the groove 6, as has been shown in the embodiment in Fig. 1; alternatively, the abovementioned light source can consist of a series of light emitters (not shown) located along an axis substantially parallel to that of the groove. This source can be of the incandescent type or can consist of a series of emitters such as LEDs or any other type capable of emitting monochromatic light, virtually monochromatic light or light of any desired colour.

The diffraction means 5 advantageously comprise a surface having diffractive projections 11 located on the rear surface 2 in order to produce a predetermined configuration; these diffractive projections can be cut directly into this surface or they can be formed on a support sheet 12 of a suitable material attached to the rear surface 2 of the block. The diffraction means 5 can be of one of the well known types, with phase modulation or with intensity modulation, and can be made up of holograms (for example of the computer generated hologram type or of the Kinoform type); in particular these diffraction means can comprise a series of the abovementioned computer generated holograms, arranged next to one another, and each of which is independent of the others, so as to control more accurately the light flux emitted by the device. In cases where the support 12 for the diffractive projections 11 is made of a sheet of plastic, it can advantageously be attached to the surface 2 using a suitable adhesive and can be covered with a suitable protective layer or with a layer of reflective material.

The lighting device described works in the following way:

A ray of light 15 emitted by the source of light radiation 4 towards the rear surface 2 is incident on the diffractive projections 11 of this surface, is diffracted thereby and emerges from said surface in the form of rays 16 which, as a result of reflection, are directed towards the front surface 3 and are subsequently refracted as they pass out of the block 1 and into the area outside, producing rays 17. On the other hand, a ray emitted by the source 4 which is directed towards the front surface 3, indicated by the reference 18 in Figure 1, is incident on said front surface and is totally reflected thereby thus producing the ray 19, which is incident on the diffraction means 5; this ray, as was the case with the ray 15, emerges in the form of diffracted rays 20 which exit the wall 3 after having been refracted as they pass through said wall.

By suitably selecting the pattern of the projections 11 of the diffraction means 5 it is possible to obtain, from the rays emitted by the surface 3, a predetermined distribution of the light flux, because, through the diffractive action exerted by the diffraction means 5 it is possible to control, at each point of the light flux emitted by the device, the direction and the intensity of the light emitted in such a way that said flux is distributed in accordance with the specific lighting requirements. In this way the light flux is distributed in a way similar to that obtained using the usual prism means found in lighting devices of the prior art.

The particular pattern of the diffraction means 5 can also be used to effect chromatic control over the light flux exiting the surface 3. This is because the action exerted by the diffraction elements 5 on the incident rays also depends on the wavelength of the rays themselves: it is therefore possible to obtain a light flux exiting the device which is of a predetermined colour and which has a desired chromatic distribution within the flux itself. This feature enables specific patterns of light to be obtained and therefore lends itself to generating effects which are particularly useful in the production of lighting devices for use on a motor vehicle.

In cases in which the device is made according to one of the embodiments of Figures 2 or 3, the rays emitted by the light source 4 first undergo the optical deviations imposed thereon by the shape of the cylindrical surfaces 10, which constitute actual lenses and which are therefore capable of suitably transmitting the rays which pass through them.

It is clear that the embodiments described in the present invention may be modified and changed without departing from the scope of said invention.

## Claims

1. Lighting device comprising a block of transparent material (1) delimited by a pair of opposite surfaces, a front surface (3) and a rear surface (2), and a source of light radiation (4) located between the planes bearing said surfaces; characterized in that said surfaces are convergent away from said light source (4), diffraction means (5) being located on said rear convergent surface (2) so that the light rays coming from said source are incident on said diffraction means and then emerge towards said front convergent surface (3); said diffraction means (5) being of the type with phase modulation having reliefs of any profile which will give a high efficiency value.

2. Device according to Claim 1, characterized in that said block of transparent material (1) has a groove (6) substantially parallel to said pair of convergent surfaces (2,3) in which said source of light radiation is housed.

3. Device according to Claim 2, characterized in that said groove (6) is delimited by a pair of surfaces (7,8) forming a dihedral.

4. Device according to one of the preceding claims 2 or 3, characterized in that said groove (6) is delimited along the top by a cylindrical surface (10) which can act as a lens for said light radiation.

5. Device according to one of the preceding claims, characterized in that said diffraction means (5) comprise diffractive projections (11) located on said surface in order to produce a predetermined configuration.

6. Device according to Claim 5, characterised in that said diffractive projections (11) are cut into said rear convergent surface (2) of said pair of convergent surfaces.

7. Device according to Claim 5, characterised in that said diffractive projections (11) are formed on a sheet of material (12) attached to said rear convergent surface (2) of said pair of surfaces.

8. Device according to one of the preceding claims, characterised in that said diffraction means (5) comprise at least one hologram (13) of the computer generated hologram type.

9. Device according to one of the preceding claims, characterised in that said diffraction means (5) comprise a series of independent holograms of the computer generated type arranged next to one another.

10. Device according to Claim 9, characterised in that said holograms (13) are recorded on a sheet of material which is attached to said rear convergent surface (2) of the pair.

11. Device according to claim 2, characterised in that said source of light radiation (4) is a source whose axis is parallel to that of said groove (6).

12. Device according to claim 2, characterised in that said source of light radiation comprises a plurality of light emitters located along an axis substantially parallel to that of said groove (6).

## Patentansprüche

1. Beleuchtungseinrichtung, umfassend einen Block aus transparentem Material (1), der begrenzt ist durch ein Paar gegenüberliegender Oberflächen, einer Frontoberfläche (3) und einer rückwärtigen Oberfläche (2), und eine Lichtstrahlungsquelle (4), die zwischen den Ebenen, in denen die Oberflächen liegen, angeordnet ist, **dadurch gekennzeichnet**, daß die Oberflächen in die zu der Lichtquelle (4) entgegengesetzte Richtung konvergieren, Brechungsmittel (5) auf der konvergierenden rückwärtigen Oberfläche (2) angeordnet sind, so daß die von der Quelle ausgehenden Lichtstrahlen auf die Brechungsmittel auftreffen und dann in Richtung auf die konvergierende Frontoberfläche (3) ausgesandt werden, wobei die Brechungsmittel (5) von der Bauart mit Phasenmodulation mit Reliefs beliebigen Profils sind, welches einen hohen Nutzungsgrad ergibt.

2. Einrichtung nach Anspruch 1, dadurch gekennzeichnet, daß der Block aus transparentem Material (1) eine im wesentlichen zu dem Paar konvergierender Flächen (2, 3) parallele Nut (6) aufweist, in welcher die Lichtstrahlungsquelle untergebracht ist.

3. Einrichtung nach Anspruch 2, dadurch gekennzeichnet, daß die Nut (6) durch ein Paar von Oberflächen (7, 8) begrenzt ist, die eine V-Form bilden.

4. Einrichtung nach einem der vorhergehenden Ansprüche 2 oder 3, dadurch gekennzeichnet, daß die Nut (6) entlang der Oberkante durch eine zylindrische Oberfläche (10) begrenzt ist, die als Linse für die Lichtstrahlung einsetzbar ist.

5. Einrichtung nach einem der vorhergehenden Ansprüche, dadurch gekennzeichnet, daß die Brechungsmittel (5) brechende Vorsprünge (11) auf der Oberfläche aufweisen, um eine vorgegebene Konfiguration zu erzeugen.

6. Einrichtung nach Anspruch 5, dadurch gekennzeichnet, daß die brechenden Vorsprünge (11) in die konvergierende rückwärtige Oberfläche (2) des Paars konvergierender Oberflächen eingeschnitten sind.

7. Einrichtung nach Anspruch 5, dadurch gekennzeichnet, daß die brechenden Vorsprünge (11) auf einer Materialbahn (12) gebildet sind, die an der konvergierenden rückwärtigen Oberfläche (2) des Paars konvergierender Oberflächen angebracht ist.

8. Einrichtung nach einem der vorhergenden Ansprüche, dadurch gekennzeichnet, daß die Brechungsmittel (5) wenigstens ein Hologramm (13) des computergenerierten Hologrammtyps umfassen.

9. Einrichtung nach einem der vorhergehenden Ansprüche, dadurch gekennzeichnet, daß die Brechungsmittel (5) eine Serie von unabhängigen Hologrammen des computergenerierten Hologrammtyps, die nebeneinander angeordnet sind, umfassen.

10. Einrichtung nach Anspruch 9, dadurch gekennzeichnet, daß die Hologramme (13) auf einer Materialbahn aufgezeichnet sind, die an der konvergierenden rückwärtigen Oberfläche (2) des Paares angebracht ist.

11. Einrichtung nach Anspruch 2, dadurch gekennzeichnet, daß die Lichtstrahlungsquelle (4) eine Quelle ist, deren Achse parallel zu der Nut (6) verläuft.

12. Einrichtung nach Anspruch 2, dadurch gekennzeichnet, daß die Lichtstrahlungsquelle eine Mehrzahl von Lichtsendern umfaßt, die entlang einer Achse angeordnet sind, die im wesentlichen parallel zu der Nut (6) verläuft.

## Revendications

1. Dispositif d'éclairage comprenant un bloc (1) de matériau transparent, délimité par un couple de surfaces opposées, une surface avant (3) et une surface arrière (2), et une source de rayonnement de lumière (4) située entre les plans portant lesdites surfaces; caractérisé en ce que lesdites surfaces convergent en s'éloignant de ladite source de lumière (4), des moyens de diffraction (5) se trouvant sur ladite surface convergente arrière (2), de manière que les rayons de lumière provenant de ladite source tombent sur lesdits moyens de diffraction et repartent ensuite vers ladite surface convergente avant (3); lesdits moyens de diffraction (5) étant du type à une modulation de phase avec des reliefs ayant tout profil qui donnera une valeur de rendement élevée.

2. Dispositif selon la revendication 1, caractérisé en ce que ledit bloc (1) de matériau transparent présente une gorge (6) sensiblement parallèle audit couple de surfaces convergentes (2, 3), dans laquelle est logée ladite source de rayonnement de lumière.

3. Dispositif selon la revendication 2, caractérisé en ce que ladite gorge (6) est délimitée par un couple de surfaces (7, 8) formant un dièdre.

4. Dispositif selon l'une des revendications précédentes 2 ou 3, caractérisé en ce que ladite gorge (6) est délimitée, le long du sommet, par une surface cylindrique (10) qui peut servir de lentille pour ledit rayonnement de lumière.

5. Dispositif selon l'une des revendications précédentes, caractérisé en ce que lesdits moyens de diffraction (5) comprennent des saillies de diffraction (11) positionnées sur ladite surface de façon à produire une configuration prédéterminée.

6. Dispositif selon la revendication 5, caractérisé en ce que lesdites saillies de diffraction (11) sont taillées dans ladite surface convergente arrière (2) dudit couple de surfaces convergentes.

7. Dispositif selon la revendication 5, caractérisé en ce que lesdites saillies de diffraction (11) sont formées sur une feuille de matériau (12) fixée à ladite surface convergente arrière (2) dudit couple de surfaces.

8. Dispositif selon l'une des revendications précédentes, caractérisé en ce que lesdits moyens de diffraction (5) comprennent au moins un hologramme (13) du type produit par ordinateur.

9. Dispositif selon l'une des revendications précédentes, caractérisé en ce que lesdits moyens de diffraction (5) comprennent une série d'hologrammes indépendants du type produit par ordinateur, disposés les uns à côté des autres.

10. Dispositif selon la -revendication 9, caractérisé en ce que lesdits hologrammes (13) sont enregistrés sur une feuille de matériau qui est fixée à ladite surface convergente arrière (2) du couple.

11. Dispositif selon la revendication 2, caractérisé en ce que ladite source de rayonnement de lumière (4) est une source dont l'axe est parallèle à celui de ladite gorge (6).

12. Dispositif selon la revendication 2, caractérisé en ce que ladite source de rayonnement de lumière comprend une pluralité d'émetteurs de lumière se trouvant le long d'un axe sensiblement parallèle à celui de ladite gorge (6).
